# EUROPÄISCHE PATENTSCHRIFT

(11) **EP 2 620 637 B1**
(45) Veröffentlichungstag und Bekanntmachung des Hinweises auf die Patenterteilung: **28.09.2016**
(21) Anmeldenummer: 12000418.9
(22) Anmeldetag: 24.01.2012
(51) Int. Cl.: F03D 1/00, F03D 80/00, F03D 7/02

(54) **Arretiervorrichtung für einen Triebstrang einer Windenergieanlage sowie Verfahren zum Arretieren des Triebstranges**
Lock device for a powertrain of a wind energy assembly and method for locking the powertrain
Dispositif de verrouillage pour la transmission d'une éolienne ainsi que procédé de verrouillage de la transmission

(43) Veröffentlichungstag der Anmeldung: 31.07.2013
(73) Patentinhaber: Nordex Energy GmbH, 22419 Hamburg (DE)
(72) Erfinder: Derksen, Juri, 32427 Minden (DE)
(74) Vertreter: Hauck Patentanwaltspartnerschaft mbB

(56) Entgegenhaltungen:
- EP-A1- 1 291 521
- WO-A1-2011/141594
- WO-A2-2010/072190
- WO-A2-2010/102967
- KR-B1- 100 821 704
- US-A1- 2011 135 481

## Beschreibung

Die vorliegende Erfindung betrifft eine Arretiervorrichtung für einen Triebstrang einer Windenergieanlage sowie ein Verfahren zum Arretieren des Triebstrangs einer Windenergieanlage.

Zur Durchführung von Wartungs- und Reparaturarbeiten muss der Rotor einer Windenergieanlage formschlüssig arretiert werden. Zu diesem Zweck ist am Maschinenträger der Windenergieanlage häufig mindestens ein Arretierbolzen angeordnet, der mit einer mit der Rotorwelle verbundenen Arretierscheibe zusammenwirkt. Zur Aufnahme der Arretierbolzen sind in der Arretierscheibe über den Umfang verteilt eine Anzahl von Arretieröffnungen angeordnet. Um die Rotorwelle zu arretieren, wird der Rotor in eine Position gedreht, die es erlaubt, die Arretierbolzen in die Bohrungen einzuführen.

Mit zunehmender Größe von Windenergieanlagen und einhergehender Vergrößerung der Rotorblattdurchmesser wachsen die Haltemomente, die durch die Arretiervorrichtung gehalten werden müssen. Die Haltemomente richten sich dabei maßgeblich nach den aerodynamischen Kräften, die sich aus den maximalen Windgeschwindigkeiten an den Rotorblättern ergeben. Diese steigenden Anforderungen werden zumeist durch erhöhte Materialstärke der Komponenten der Arretiervorrichtung ausgeglichen. Die hohen Anforderungen an die Fertigungstoleranzen für die Systemkomponenten der Arretiervorrichtung führen bei zunehmender Materialstärke allerdings zu einem stark steigenden Aufwand bei den Herstellungsprozessen dieser Teile.

Bereits bei geringfügigen Abweichungen der Fertigungsmaße oder geringfügig schiefer Ausrichtung von Bolzen zu Bohrung können bei dem Einführen eines Arretierbolzens in die Arretieröffnung hohe mechanische Spannungen bzw. Belastungen auftreten, die sich bei Windbelastungen um ein Vielfaches erhöhen. Diese mechanischen Belastungen können zur Verformung bzw. zur Beschädigung einzelner Systemkomponenten der Arretiervorrichtung führen.

Aus US 2010/0021299 A1 ist eine Arretieranordnung für Rotorblätter einer Windenergieanlage bekannt, bei der ein Arretierbolzen zur Arretierung der Rotorblätter in eine Arretieröffnung an der Rotornabe verschoben wird. Mit Hilfe zweier Keile, die den Arretierbolzen umfassen, wird der Arretierbolzen in radialer Richtung verschoben, um eine schiefe Ausrichtung von Arretierbolzen zu Arretieröffnung auszugleichen.

Aus DE 101 19 427 A1 ist eine Arretieranordnung zur Arretierung einer Rotorwelle für Windenergieanlagen bekannt, wobei ein Arretierring an der Rotorwelle befestigt ist und umlaufend radial verlaufende Arretieröffnungen aufweist. Zur Arretierung der Rotorwelle werden Arretierbolzen in die Arretieröffnungen geführt, die mit dem Arretierring formschlüssig zusammenwirken und so die Rotorwelle drehfest fixieren.

Aus EP 1 291 521 A1 ist ein Arretiersystem für Rotorblätter einer Windenergieanlage bekannt, bei dem zur Arretierung der Rotorblätter ein Arretierbolzen in eine Bohrung einer Arretierscheibe geführt wird. Der Arretierbolzen sowie die Bohrung in der Arretierscheibe können eine zueinander korrespondierende abgeschrägte Form aufweisen, um das Einführen des Arretierbolzens bei einer schiefen Ausrichtung zur Bohrung zu erleichtern.

Aus der US 2011/0135481 A1 ist eine weitere Rotorarretieranordnung für Windenergieanlagen bekannt, bei der Arretierbolzen in Arretieröffnungen einer Rotorarretierscheibe geschoben werden. Die Arretierbolzen sind hierbei an eine Arretierbolzenaufnahme gekoppelt. Zur Ausrichtung eines Arretierbolzens mit einer Arretieröffnung wird die Arretierbolzenaufnahme des Arretierbolzens bezogen auf die Rotorarretierscheibe entsprechend positioniert.

Aus WO 2010/102967 A2 ist eine Arretieranordnung für eine Rotorwelle in einer Windenergieanlage bekannt, bei dem ein Arretierbolzen in einer zur Rotorwelle radialen Richtung verschiebbar ist. Zur Arretierung der Rotorwelle wird der Arretierbolzen senkrecht zur Rotorwelle in eine Bohrung einer an der Rotorwelle befestigten Arretiervorrichtung verschoben.

Der Erfindung liegt die Aufgabe zugrunde, eine Arretiervorrichtung und ein Verfahren zum Arretieren eines Triebstrangs einer Windenergieanlage bereitzustellen, mit dem einerseits Fertigungs- und Montagetoleranzen von Teilen der Arretiervorrichtung ausgeglichen und andererseits mechanische Spannungen an den Bauteilen der Arretiervorrichtung reduziert werden können.

Erfindungsgemäß wird die Aufgabe durch eine Arretiervorrichtung mit den Merkmalen aus Anspruch 1 gelöst. Vorteilhafte Ausgestaltungen bilden die Gegenstände der Unteransprüche zu Anspruch 1.

Die erfindungsgemäße Arretiervorrichtung ist für einen auf einem Maschinenträger gelagerten Triebstrang einer Windenergieanlage mit einem Rotor vorgesehen. Die Arretiervorrichtung ist mit einem Arretierbolzen und einem an dem Rotor angeordneten Arretierprofil ausgestattet. Erfindungsgemäß ist der Arretierbolzen bezüglich des Arretierprofils in seiner Längsrichtung verschiebbar. Der Arretierbolzen ist ferner mit einem sich verjüngenden Endabschnitt in eine Arretieröffnung des Arretierprofils einführbar. Der Endabschnitt kann beispielsweise konisch ausgebildet sein. Der Arretierbolzen ist in einem vorbestimmten Winkelbereich um seine Längsachse drehbar gelagert. Erfindungsgemäß weist der Arretierbolzen an seinem Endabschnitt mindestens eine abgeflachte Anlagefläche auf. Die Arretieröffnung ist ebenfalls mit mindestens einer abgeflachten Anlagefläche ausgestattet. Beim Einführen des Arretierbolzens in die Arretieröffnung, richtet sich der Arretierbolzen derart in der Arretieröffnung aus, dass seine mindestens eine abgeflachte Anlagefläche flächig an der mindestens einen abgeflachten Anlagefläche der Arretieröffnung anliegt.

Erfindungsgemäß kann bei dieser Ausgestaltung ein leichter Versatz oder eine Verdrehung zwischen Arretieröffnung und Arretierbolzen durch die Drehbewegung des Arretierbolzens ausgeglichen werden. Der Arretierbolzen kann sich beim Einführen in die Arretieröffnung an einer Anlagefläche der Arretieröffnung ausrichten. Die Arretieröffnung weist dabei vorzugsweise eine längere abgeflachte Anlagefläche als der Arretierbolzen auf. Vorteilhaft können in dieser Ausgestaltung mechanische Spannungen und somit Materialermüdung oder -defekte beim Einführen des Arretierbolzens in die Arretieröffnung verringert werden. Der Endabschnitt des Arretierbolzens hat beispielsweise einen kreisrunden oder kreisähnlichen Querschnitt mit mindestens einer abgeflachten Anlagefläche. Alternativ kann der Endabschnitt oval, rechteckig oder quadratisch ausgebildet sein. Die Arretieröffnung besitzt vorzugsweise eine zur Form des Endabschnitts des Arretierbolzens korrespondierende Form. Die Form der Arretieröffnung kann allerdings von der Form des Endabschnitts insoweit abweichen, dass der Arretierbolzen in seiner eingeführten Position jedenfalls mindestens bereichsweise formschlüssig mit der Arretieröffnung zusammenwirkt.

Erfindungsgemäß steht der Arretierbolzen über mindestens ein Koppelelement drehbeweglich mit einem Mitnehmer in Wirkverbindung. Aus einer Ausgangsstellung kann der Arretierbolzen links- und/oder rechtsdrehend in dem vorbestimmten Winkelbereich gegenüber dem Mitnehmer gedreht werden. Durch das Koppelelement kann einerseits der Drehwinkelbereich des Arretierbolzens eingestellt werden. Andererseits kann das Koppelelement dazu eingesetzt werden, den Arretierbolzen aktiv oder passiv in eine bestimmte Drehlage zu bringen.

Erfindungsgemäß sind der Arretierbolzen an seinem Endabschnitt und das Arretierprofil an der Arretieröffnung mit jeweils mindestens einer abgeflachten Anlagefläche versehen. Die abgeflachten Anlageflächen besitzen bevorzugt einen größeren Krümmungsradius als die daran angrenzenden Flächen. Durch diese erfindungsgemäße Form werden die beim Einführen des Arretierbolzens in die Arretieröffnung auftretenden mechanischen Kräfte bzw. Spannungen mindestens bereichsweise auf die sich kontaktierenden abgeflachten Anlageflächen des Endabschnitts und der Arretieröffnung verteilt. Punkt- und Linienkräfte oder Spannungen an den Anlageflächen des Arretierbolzens und der Arretieröffnung können vermieden werden. Durch den flächigen Kontakt der Anlageflächen wird die durch das Haltemoment des Rotors bedingte Krafteinwirkung zumindest bereichsweise flächig auf die Kontaktstellen zwischen Arretierbolzen und Arretieröffnung verteilt. Ferner bewirken die abgeflachten Anlageflächen, dass der drehbewegliche Arretierbolzen beim Einführen in eine korrespondierende Arretieröffnung so ausgerichtet werden kann, dass eine Schiefstellung oder Verdrehung zwischen Arretierbolzen und -öffnung ausgeglichen wird. Dazu kann der Arretierbolzen manuell oder selbsttätig in eine Lage gebracht werden, die der Ausrichtung der Arretieröffnung entspricht. Die Anlagefläche der Arretieröffnung ist bevorzugt zumindest bereichsweise korrespondierend zum Endabschnitt des Arretierbolzens geformt. Dabei verteilt sich die zu haltende Kraft automatisch gleichmäßig auf die abgeflachte Fläche.

In einer bevorzugten Ausgestaltung erstreckt sich die abgeflachte Anlagefläche der Arretieröffnung auf dem Arretierprofil in im Wesentlichen radialer Richtung, bezogen auf die Längachse des Rotors. In dieser Ausgestaltung ist das Arretierprofil scheibenförmig ausgebildet und verläuft im Wesentlichen senkrecht zur Längsachse des Rotors. Die scheibenförmige Ausgestaltung des Arretierprofils ermöglicht eine kompakte Anordnung der Arretiervorrichtung in dem Maschinengehäuse der Windenergieanlage. Das Führungselement des Arretierbolzens kann dazu unter Ausnutzung des horizontal vorhandenen Raumes im Maschinengehäuse unterhalb des äußeren Randes des Arretierprofils angeordnet werden, wobei der Arretierbolzen parallel zur Längsachse des Rotors in die Arretieröffnung einschiebbar ist. Die Längsachse des Rotors fällt mit der Drehachse des Rotors zusammen.

In einer weiteren Ausgestaltung der Erfindung erstreckt sich die abgeflachte Anlagefläche der Arretieröffnungen auf dem Arretierprofil in im Wesentlichen axialer Richtung, bezogen auf die Längsachse des Rotors. In dieser Ausgestaltung ist das Arretierprofil zylinderförmig ausgebildet, wobei die Mantelfläche des Arretierprofils im Wesentlichen mit konstantem Abstand zur Längsachse des Rotors verläuft. Der Arretierbolzen wird hier radial zur Längsachse des Rotors in die Arretieröffnung des Arretierprofils eingeführt. Durch die axiale Ausrichtung der Arretieröffnungen wird die Haltekraft in der abgeflachten Anlagefläche parallel zur Längsachse des Rotors aufgenommen.

In einer bevorzugten Ausgestaltung ist das Führungselement an dem Maschinenträger drehfest angeordnet. Das Führungselement kann dafür direkt oder indirekt mit dem Maschinenträger verbunden werden. Erfindungsgemäß ist der Arretierbolzen verschiebbar in dem Führungselement angeordnet. Die Verbindung zwischen Führungselement und Maschinenträger kann beispielsweise durch eine kraftschlüssige Verbindung hergestellt werden, denkbar sind insbesondere Schraub- oder Nietverbindungen. Alternativ kann das Führungselement auch stoffschlüssig mit dem Maschinenträger verbunden sein, beispielsweise kann das Führungselement dafür mit dem Maschinenträger verschweißt sein. Alternativ kann das Führungselement integral mit dem Maschinenträger ausgebildet sein. Eine drehfeste Verbindung des Führungselements mit dem Maschinenträger kann ferner indirekt realisiert sein. Beispielsweise kann das Führungselement dazu an einer Halterung angebracht sein, die drehfest mit dem Maschinenträger verbunden ist.

In einer bevorzugten Ausgestaltung ist das Koppelelement mit mindestens einem Federelement ausgestattet. Damit kann der Arretierbolzen in einer nicht eingeführten Position in einer Ausgangsstellung bzw. einer Nennlage gegenüber dem Mitnehmer gehalten werden. Das Federelement bewirkt ferner, dass der Arretierbolzen beim Einführen in die Arretieröffnung aus seiner Ausgangslage gegen die Rückstellkraft des Federelements gedreht werden kann. Bei einem Versatz oder einer schiefen Ausrichtung von Arretierbolzen zu Arretieröffnung kann sich der Arretierbolzen also beim Einführen selbsttätig in eine passende Lage drehen. Bei dieser Ausgestaltung wird ein flächiger Kontakt zwischen den Anlageflächen des Endabschnitts und den Anlageflächen an der Innenseite der Arretieröffnung ermöglicht. Punktuelle oder linienförmige mechanische Spannungen an den Anlageflächen des Arretierbolzens und der Arretieröffnung beim Einführen werden vermieden.

In einer bevorzugten Ausgestaltung verjüngt sich der Endabschnitt hin zum freien Ende des Arretierbolzens. Insbesondere kann der Endabschnitt eine konische Form aufweisen. Durch den verjüngenden Endabschnitt verläuft die Anlagefläche schräg zur Längsachse des Arretierbolzens, so dass der Arretierbolzen sich beim Einführen in die Arretieröffnung an den Anlageflächen der Innenseite der Arretieröffnung ausrichtet. Dadurch kann der Endabschnitt des Arretierbolzens auch bei einer Schiefstellung von Arretierbolzen zu Arretieröffnung in die Arretieröffnung eingeführt werden. Die Passgenauigkeit des Endabschnitts zur Arretieröffnung kann damit erhöht werden.

In einer weiteren Ausgestaltung ist die Arretiervorrichtung mit einer Verdrehsicherung ausgestattet, die den Mitnehmer gegen eine Verdrehung in dem Führungselement sichert. Durch die Sicherung des Mitnehmers gegen Verdrehung im Führungselement kann der Arretierbolzen in einer vorbestimmten Ausgangslage gehalten und gegen eine Verdrehung über den vorbestimmten Winkelbereich hinaus gesichert werden. Die Verdrehsicherung kann aus einem oder mehreren Bauteilen mit unterschiedlicher Gestalt zum Halten des Mitnehmers bestehen.

In einer weiteren Ausgestaltung ist die Verdrehsicherung als zylindrischer Stift ausgebildet. Der Stift ist an seinem ersten Ende dreh- und bewegungsfest mit dem Maschinenträger verbunden. Mit seinem zweiten Ende ist der Stift in eine Aussparung des Mitnehmers einführbar. Durch die drehfeste Verbindung der Verdrehsicherung mit dem Maschinenträger, kann ein an dem Mitnehmer wirkendes Drehmoment auf den Maschinenträger übertragen werden. Die Ausgestaltung der Verdrehsicherung als zylindrischer Stift ist besonders einfach und kostengünstig. Alternativ kann die Verdrehsicherung auch in Form einer Linearführung ausgebildet sein. Dazu kann eine Ausformung an dem Mitnehmer vorgesehen sein, die in eine korrespondierende Führungsnut an der Innenseite des Führungselements eingreift. Die Führungsnut verläuft dabei im Wesentlichen parallel zur Längsachse des Führungselements. Ein an dem Mitnehmer anliegendes Drehmoment wird damit durch das Führungselement kompensiert. Denkbar ist auch, dass das Führungselement auf seiner Innenseite eine Führungsschiene aufweist, die in eine korrespondierende Einbuchtung am Mitnehmer einreift.

In einer bevorzugten Ausgestaltung ist die Arretiervorrichtung mit einem Antrieb versehen. Über diesen Antrieb ist der Mitnehmer verschiebbar. Mit Hilfe eines Antriebs kann auf einfache Weise eine in Längsrichtung des Arretierbolzens gerichtete Kraft auf den Mitnehmer ausgeübt werden, über die der Mitnehmer in dem Führungselement verschoben werden kann. Ein drehbar an dem Mitnehmer angeordneter Arretierbolzen kann in der Folge zusammen mit dem Mitnehmer verschoben werden.

Der Antrieb kann als ein manueller, ein hydraulischer oder ein elektromechanischer Antrieb ausgebildet sein. Mit Hilfe eines manuellen Antriebs, beispielsweise einer Handkurbel oder eines Handrads, kann der Mitnehmer durch Muskelkraft verschoben werden. Bei dieser besonders einfachen Ausgestaltung des Antriebs kann der Triebstrang der Anlage auch bei Wegfall oder Fehlfunktion der Energieversorgung arretiert werden. Der Antrieb kann alternativ oder zusätzlich auch als hydraulischer oder elektromechanischer Antrieb ausgebildet sein. Bei dieser Ausgestaltung kann der Mitnehmer unter Einsatz mechanischer oder elektrischer Energie verschoben werden.

In einer bevorzugten Ausgestaltung ist der Antrieb mit einem mit dem Maschinenträger verbindbaren Befestigungselement versehen. An dem Befestigungselement ist ein längliches Verstellelement angeordnet, über das der Mitnehmer aus einer Entfernung verschoben werden kann.

In einer weiter bevorzugten Ausgestaltung ist das längliche Antriebselement eine Antriebsspindel. Damit kann auf einfache Weise eine rotatorische Bewegung des Verstellelements in eine translatorische Bewegung des Mitnehmers umgesetzt werden. Dazu könnte ein manueller oder elektrischer Antrieb das Verstellelement in Rotation bringen und ein drehfest an dem Mitnehmer angeordnetes Gewindeelement mit dem länglichen Verstellelement zusammenwirken, sodass die Rotationsbewegung der Gewindespindel in eine Schubbewegung des Mitnehmers umgesetzt wird. Alternativ kann das längliche Verstellelement auch als Hubzylinder ausgebildet sein, über den der Mitnehmer elektromechanisch oder hydraulisch verschoben werden kann.

Die erfindungsgemäße Aufgabe wird ebenfalls durch ein Verfahren mit den Merkmalen aus Anspruch 16 gelöst. Vorteilhafte Ausgestaltungen bilden die Unteransprüche zu Anspruch 16.

Das erfindungsgemäße Verfahren ist vorgesehen und bestimmt zum Arretieren eines auf einem Maschinenträger gelagerten Triebstrangs einer Windenergieanlage, der einen Rotor mit einem Arretierprofil aufweist. Das Arretierprofil besitzt mindestens eine mit einer abgeflachten Anlagefläche ausgestattete Arretieröffnung, in die ein Arretierbolzen mit einem verjüngenden Endabschnitt einführbar ist, wobei der Endabschnitt des Arretierbolzens mindestens eine abgeflachte Anlagefläche aufweist, gekennzeichnet durch folgende Schritte:
- Ausrichten des Arretierprofils mit einer seiner Arretieröffnungen in eine Position, in der der Arretierbolzen in die Arretieröffnung einschiebbar ist,
- Vorschieben des Arretierbolzens in seiner Längsrichtung und Drehung des Arretierbolzens um eine Längsrichtung derart, dass im eingeführten Zustand des Arretierbolzens die abgeflachte Anlagefläche des Arretierbolzens an der abgeflachten Anlagefläche der Arretieröffnung flächig anliegt.

Das erfindungsgemäße Verfahren ist durch den Verfahrensschritt gekennzeichnet, dass bei einem Vorschieben des Arretierbolzens dieser sich durch eine Drehbewegung um seine Längsachse in der Arretieröffnung ausrichtet, um einen flächigen Kontakt der Anlagefläche herzustellen. Bevorzugt richtet sich der Arretierbolzen während seines Vorschubs in die Arretieröffnung selbsttätig in der Arretieröffnung aus.

Die Erfindung wird nachfolgend anhand eines Ausführungsbeispiels näher erläutert. Es zeigt:
- Fig. 1: eine Schnittdarstellung einer Arretiervorrichtung in einer Arretierposition,
- Fig. 2: eine perspektivische Darstellung eines Arretierbolzens aus Fig. 1,
- Fig. 3: eine Draufsicht auf einen erfindungsgemäßen Arretierbolzen aus Fig. 1.
- Fig. 4: eine perspektivische Darstellung eines Arretierbolzens aus Fig. 1 mit einem manuellen Antrieb,

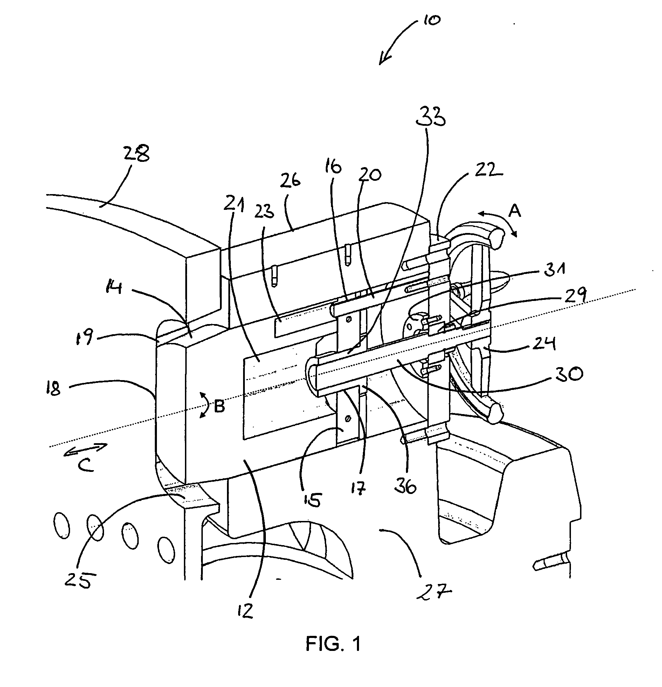

Fig. 1 zeigt eine erfindungsgemäße Arretiervorrichtung 10 in einer Schnittdarstellung mit einem zylinderförmigen Arretierbolzen 12 und einem scheibenförmigen Arretierprofil 28. Der Arretierbolzen 12 ist in seiner Längsrichtung verschiebbar in einem rohrartigen Innenraum eines Führungselements 26 angeordnet, wobei die Verschiebungsrichtung des Arretierbolzens 12 im Wesentlichen senkrecht auf dem Arretierprofil 28 steht. An seinem freien Ende ist der Arretierbolzen 12 mit einem sich verjüngenden Endabschnitt 14 ausgestattet. Das Führungselement 26 ist integral mit einem Maschinenträger 27 ausgebildet. Das Führungselement 26 ist auf seiner dem Arretierprofil 28 abgewandten Seite von einem scheibenartigen Befestigungselement 22 deckelartig verschlossen. Das Befestigungselement 22 ist dabei dreh- und bewegungsfest durch Verschraubungen mit dem Führungselement 26 verbunden. Der Endabschnitt 14 des Arretierbolzens 12 ist mit einer ersten abgeflachten Anlagefläche 18 versehen. Korrespondierend zur ersten Anlagefläche 18 des Arretierbolzens 12 ist eine Arretieröffnung 25 des Arretierprofils 28 mit einer zweiten abgeflachten Anlagefläche 19 versehen. In einer ausgefahrenen Position ist der Arretierbolzen 12 in die als radial ausgerichtetes Langloch ausgebildete Arretieröffnung 25 des Arretierprofils 28 eingerührt. In dieser Arretierposition liegen die Anlageflächen 18 und 19 flächig aneinander. Das Arretierprofil 28 ist drehfest an einer Rotorwelle (nicht dargestellt) angeordnet. Durch die mindestens bereichsweise formschlüssige Verbindung von Arretierbolzen 12 und Arretierprofil 28, bei der die abgeflachten Anlageflächen 18, 19 von Arretierbolzen 12 und Arretieröffnung 25 flächig aneinanderliegen, wird der Triebstrang einer Windenergieanlage (nicht dargestellt) drehfest gegen den Maschinenträger 27 arretiert. Ein drehfest an der Rotorwelle angebrachter Rotor der Windenergieanlage (nicht dargestellt) ist so gegen Rotation gesichert.

Ein Mitnehmer 15 ist zentriert an dem dem freien Ende gegenüberliegenden Ende des Arretierbolzens 12 angeordnet. Der Mitnehmer 15 ist mit einer zentralen Bohrung 17 versehen, durch die sich das zweite Ende eines länglichen Verstellelements 30 erstreckt. Das längliche Verstellelement 30 ist dabei über ein als Kugelgewindemutter ausgebildetes Verbindungselement 33 in der zentralen Bohrung 17 des Mitnehmers 15 gelagert. Das Verbindungselement 33 ist ferner mit einem kragenartig geformten Befestigungsflansch 36 versehen, über den das Verbindungselement 33 dreh- und bewegungsfest an dem Mitnehmer 15 angeordnet ist. Das dem zweiten Ende gegenüberliegende erste Ende des länglichen Verstellelements 30 ist über ein als Axiallager ausgebildetes Verbindungselement 29 drehbar in einer zentralen Bohrung des Befestigungselements 22 gelagert. Das Verbindungselement 29 ist mit einem kragenartigen Befestigungsflansch 31 ausgestattet, über den das Verbindungselement 29 dreh- und bewegungsfest mit dem Befestigungselement 22 verbunden ist. Der Mitnehmer 15 ist in seinem Randbereich ferner mit einer Aussparung 16 versehen, durch die sich das zweite Ende einer als zylindrischer Stift ausgebildeten Verdrehsicherung 20 erstreckt. Das dem zweiten Ende gegenüberliegende erste Ende der Verdrehsicherung 20 ist drehfest an dem Befestigungselement 22 angeordnet. In der Wirkverbindung von Mitnehmer 15 und Verdrehsicherung 20 wird ein Verdrehen des Mitnehmers 15 in dem Führungselement 26 verhindert.

Ein an dem Befestigungselement 22 angeordneter Antrieb 24 wirkt mit dem sich durch die zentrale Bohrung des Befestigungselements 22 hindurch erstreckenden Teil des Verstellelements 30 derart zusammen, dass bei der Betätigung des Antriebs 24 der Mitnehmer 15 gegenüber dem Befestigungselement 22 verschoben wird. Die Betätigungsrichtung des Antriebs 24 ist mit dem Richtungspfeil A gekennzeichnet. Die Verschiebungsrichtung des Arretierbolzens 12 ist mit dem Richtungspfeil C gekennzeichnet. In dem Ausführungsbeispiel nach Fig. 1 ist die Arretiervorrichtung 10 mit einem als Kurbelrad ausgeführten manuellen Antrieb 24 ausgestattet. Eine Rotationsbewegung des Antriebs 24 in Richtung A wird in eine translatorische Schubbewegung des Mitnehmers 15 und des damit verbundenen Arretierbolzens 12 in Richtung C umsetzt. Alternativ oder unterstützend zu dem Kurbelrad kann ein Hydraulik- oder Elektromotor vorgesehen sein, über den der Arretierbolzen 12 in dem Führungselement 26 verschoben werden kann.

Der sich durch die zentrale Bohrung 17 des Mitnehmers 15 erstreckende Teil des Verstellelements 30 ragt in einen ersten Hohlraum 21 des Arretierbolzens 12. Der erste Hohlraum 21 ist so dimensioniert, dass der sich durch die zentrale Bohrung 17 des Mitnehmers 15 ersteckenden Teil des länglichen Verstellelements 30 sowohl in der vollständig ausgefahrenen als auch in der vollständig eingefahrenen Position des Arretierbolzens 12 in den ersten Hohlraum 21 eintauchen kann. Entsprechendes gilt für einen zweiten Hohlraum 23, in den sich die als zylindrischer Stift ausgebildete Verdrehsicherung 20 des Mitnehmers 15 hinein erstreckt. Der erste und zweite Hohlraum 21, 23 sind als separate Hohlräume ausgebildet. Alternativ kann ein gemeinsamer Hohlraum im Arretierbolzen 12 vorgesehen sein, in den die Verdrehsicherung 20 und das Verstellelement 30 eintauchen.

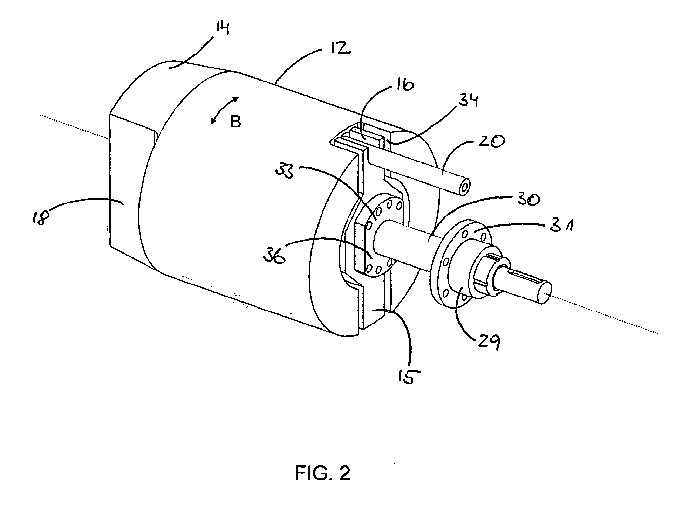

Fig. 2 zeigt einen erfindungsgemäßen Arretierbolzen 12 aus Fig. 1 mit einem sich verjüngenden Endabschnitt 14 und einer ersten abgeflachten Anlagefläche 18. An dem dem freien Ende des Arretierbolzens 12 gegenüberliegenden Ende ist eine Aussparung 34 vorgesehen in der der Mitnehmer 15 angeordnet ist. Die Aussparung 34 ist als schlitzförmiger Kanal ausgebildet, der in seinem zentralen Abschnitt eine kreisförmige Erweiterung aufweist. Durch eine zentrale Bohrung 17 des Mitnehmers 15 erstreckt sich in Längsrichtung des Arretierbolzens 12 ein längliches Verstellelement 30. Eine als zylindrischer Stift ausgebildete Verdrehsicherung 20 erstreckt sich mit ihrem zweiten Ende durch eine U-förmig ausgestaltete Aussparung 16 im Randbereich des Mitnehmers 15.

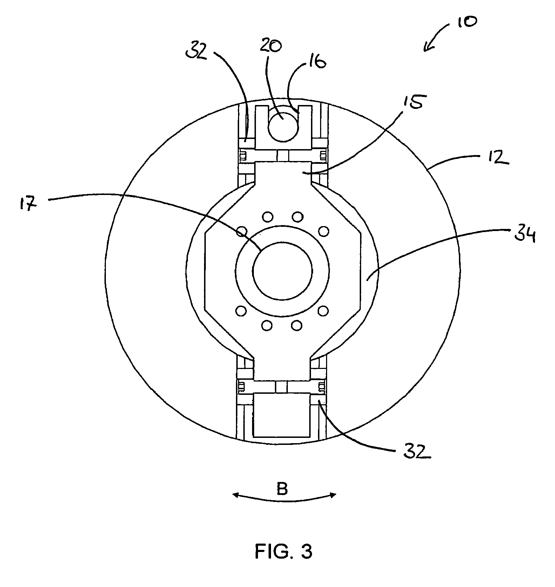

Fig. 3 zeigt einen erfindungsgemäßen Arretierbolzen 12 aus Fig. 1 in einer Draufsicht in Längsrichtung. Der länglich geformte Mitnehmer 15 ist zentral in einer Aussparung 34 an dem hinteren Ende des Arretierbolzens 12 angeordnet. Zwischen dem Arretierbolzen 12 und dem Mitnehmer 15 ist ein kanalförmiger Freiraum ausgebildet, in dem mindestens ein Koppelement 32 angeordnet ist, über das der Arretierbolzen 12 drehbeweglich mit dem Mitnehmer 15 in Wirkverbindung steht. Der Arretierbolzen 12 kann um seine Längsachse aus einer Ausgangsstellung links- und/oder rechtsdrehend innerhalb eines vorgegebenen Winkelbereichs gegenüber dem Mitnehmer 15 verdreht werden. Der Drehwinkelbereich des Arretierbolzens 12 ist durch den Stellbereich der Koppelelemente 32 definiert. Die Koppelelemente 32 sind seitlich im Randbereich an dem länglich ausgestalteten Mitnehmer 15 angeordnet. Im vorliegenden Ausführungsbeispiel sind die Koppelelemente 32 mit Federelementen ausgestattet, die den Arretierbolzen 12 in Drehrichtung B um seine Längsachse federnd gegen den Mitnehmer 15 abstützen.

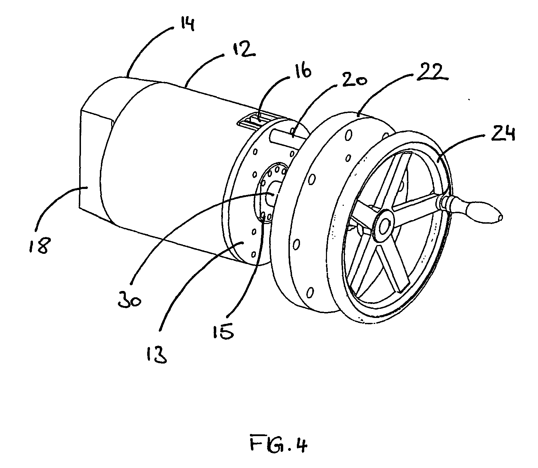

Fig. 4 zeigt einen zylinderförmigen Arretierbolzen 12 aus Fig. 1 mit einem sich an seinem freien Ende verjüngenden Endabschnitt 14. Der Endabschnitt 14 ist mit einer ersten abgeflachten Anlagefläche 18 versehen. Ein Mitnehmer 15 ist unter einer scheibenförmigen Abdeckplatte 13 zentriert an dem dem freien Ende gegenüberliegenden Ende des Arretierbolzens 12 angeordnet. In seinem Randbereich ist der Mitnehmer 15 mit einer als Nut ausgebildeten Aussparung 16 versehen, durch die sich ein zweites Ende einer als zylindrischer Stift ausgebildeten Verdrehsicherung 20 erstreckt. Ein Befestigungselement 22 ist dem Arretierbolzen 12 vorgelagert. An dem Befestigungselement 22 ist ein Handrad 24 angeordnet.

### Bezugszeichenliste

- 10: Arretiervorrichtung
- 12: Arretierbolzen
- 13: Abdeckplatte
- 14: Endabschnitt des Arretierbolzens
- 15: Mitnehmer
- 16: Aussparung im Randbereich des Mitnehmers
- 17: zentrale Bohrung im Mitnehmer
- 18: erste abgeflachte Anlagefläche am Endabschnitt des Arretierbolzens
- 19: zweite abgeflachte Anlagefläche der Arretierscheibe
- 20: Verdrehsicherung
- 21: erster Hohlraum
- 22: Befestigungselement
- 23: zweiter Hohlraum
- 24: Antrieb
- 25: Arretieröffnung
- 26: Führungselement
- 27: Maschinenträger
- 28: Arretierscheibe
- 29: Verbindungselement am Befestigungselement
- 30: längliches Verstellelement
- 31: Befestigungsflansch am Befestigungselement
- 32: Koppelelement
- 33: Verbindungselement am Mitnehmer
- 34: Aussparung zur Aufnahme des Mitnehmers
- 36: Befestigungsflansch des Verbindungselements

## Patentansprüche

1. Arretiervorrichtung für einen auf einem Maschinenträger (27) gelagerten Triebstrang einer Windenergieanlage mit einem Rotor, aufweisend einen Arretierbolzen (12) sowie ein an dem Rotor drehfest anordenbares Arretierprofil (28) mit mindestens einer Arretieröffnung (25), wobei der Arretierbolzen (12) bezüglich des Arretierprofils (28) verschiebbar und mit einem verjüngenden Endabschnitt (14) in die Arretieröffnung (25) der Arretierscheibe (28) einführbar ist, wobei
• der Arretierbolzen (12) um seine Längsachse drehbar ist,
• der Arretierbolzen (12) an seinem Endabschnitt (14) mindestens eine abgeflachte erste Anlagefläche (18) aufweist,
• die Arretieröffnung (25) in dem Arretierprofil (28) mindestens eine abgeflachte zweite Anlagefläche (19) aufweist und
• der Arretierbolzen (12) beim Einführen in die Arretieröffnung (25) sich derart ausrichtet., dass seine mindestens eine abgeflachte Anlagefläche (18) flächig an der mindestens einen abgeflachten Anlagefläche (19) der Arretieröffnung (25) anliegt, **dadurch gekennzeichnet, dass**
der Arretierbolzen (12) über mindestens ein Koppelelement (32) drehbeweglich mit einem Mitnehmer (15) zusammenwirkt und aus einer Ausgangstellung links- und/oder rechtsdrehend in einem einstellbaren Drehbereich drehbar gelagert ist.

2. Arretiervorrichtung nach Anspruch 1, **dadurch gekennzeichnet, dass** sich die abgeflachte zweite Anlagefläche (19) der Arretieröffnung (25) in im Wesentlichen radialer Richtung, bezogen auf die Längsachse des Rotors, auf dem Arretierelement (28) erstreckt.

3. Arretiervorrichtung nach Anspruch 2, **dadurch gekennzeichnet, dass** der Arretierbolzen (12) in seiner Längsrichtung im Wesentlichen in zum Rotor paralleler Richtung verschiebbar ist.

4. Arretiervorrichtung nach Anspruch 1, **dadurch gekennzeichnet, dass** sich die abgeflachte zweite Anlagefläche (19) der Arretieröffnung (25) in im Wesentlichen axialer Richtung, bezogen auf die Längsachse des Rotors, auf dem Arretierprofil (28) erstreckt.

5. Arretiervorrichtung nach Anspruch 4, **dadurch gekennzeichnet, dass** der Arretierbolzen (12) in seiner Längsrichtung im Wesentlichen in zum Rotor radialer Richtung verschiebbar ist.

6. Arretiervorrichtung nach einem der Ansprüche 1 bis 5, **dadurch gekennzeichnet, dass** ein Führungselement (26) an dem Maschinenträger (27) drehfest angeordnet ist, wobei der Arretierbolzen (12) verschiebbar in dem Führungselement (26) angeordnet ist.

7. Arretiervorrichtung nach Anspruch 1, **dadurch gekennzeichnet, dass** das mindestens eine Koppelelement (32) mindestens ein Federelement aufweist.

8. Arretiervorrichtung nach einem der Ansprüche 1 oder 7, **dadurch gekennzeichnet, dass** eine Verdrehsicherung (20) vorgesehen ist, die den Mitnehmer (15) gegen Verdrehung in dem Führungselement (26) sichert.

9. Arretiervorrichtung nach Anspruch 8, **dadurch gekennzeichnet, dass** die Verdrehsicherung (20) als zylindrischer Stift ausgebildet ist, der an seinem ersten Ende bewegungsfest mit dem Maschinenträger (27) verbunden und mit seinem zweiten Ende in eine Aussparung (16) des Mitnehmers (15) einführbar ist.

10. Arretiervorrichtung nach einem der Ansprüche 1 bis 9, **dadurch gekennzeichnet, dass** ein Antrieb (24) vorgesehen ist, über den der Mitnehmer (15) verschiebbar ist.

11. Arretiervorrichtung nach Anspruch 10, **dadurch gekennzeichnet, dass** der Antrieb (24) ein mit dem Maschinenträger (27) verbindbares Befestigungselement (22) aufweist, an dem ein längliches Verstellelement (30) angeordnet ist.

12. Arretiervorrichtung nach Anspruch 11, **dadurch gekennzeichnet, dass** das längliche Verstellelement (30) eine Antriebsspindel ist.

13. Verfahren zum Arretieren eines auf einem Maschinenträger gelagerten Triebstranges einer Windenergieanlage mit einer Arretiervorrichtung gemäß einem der Ansprüche 1-12, wobei der Triebstrang einen Rotor mit einem Arretierprofil aufweist, dass mindestens eine Arretieröffnung mit einer abgeflachten Anlagefläche besitzt, in die ein Arretierbolzen mit einem verjüngenden Endabschnitt einführbar ist, wobei der Endabschnitt des Arretierbolzens mindestens eine abgeflachte erste Anlagefläche aufweist, **gekennzeichnet durch** folgende Schritte:
• Ausrichten des Arretierprofils mit einer seiner Arretieröffnungen in eine Position, in der der Arretierbolzen in die Arretieröffnung einschiebbar ist,
• Vorschieben des Arretierbolzens in seiner Längsrichtung und
• Drehung des Arretierbolzens um seine Längsachse in der Art, dass im vorgeschobenen Zustand des Arretierbolzens die abgeflachte erste Anlagefläche des Arretierbolzens flächig an der abgeflachten zweiten Anlagefläche der Arretieröffnung anliegt.

14. Verfahren nach dem vorangehenden Anspruch, **dadurch gekennzeichnet, dass** der Arretierbolzen sich während des Vorschubs selbsttätig in der Arretieröffnung ausrichtet.

## Claims

1. A locking device for a wind turbine drive train that is mounted on a mainframe (27) having a rotor, which has a locking bolt (12) as well as a locking profile (28) which can be arranged on the rotor for conjoint rotation and has at least one locking opening (25), wherein the locking bolt (12) is movable relative to the locking profile (28), and has a tapering section (14) that can be inserted into the locking opening (25) of the locking profile (28), wherein
• the locking bolt (12) can rotate about its longitudinal axis,
• the end section (14) of the locking bolt (12) has at least one flat first contact surface (18),
• the locking opening (25) in the locking profile (28) has at least one flat second contact surface (19), and
• upon being inserted into the locking opening (25), the locking bolt (12) aligns itself such that its at least one flat contact surface (18) lies flat against the at least one flat contact surface (19) of the locking opening (25), **characterized in that**
the locking bolt (12) interacts rotatably with a catch (15) via at least one coupling unit element (32), and is mounted so as to be rotatable from an initial position to the left and/or to the right within an adjustable range of rotation.

2. The locking device according to claim 1, **characterized in that** the flat second contact surface (19) of the locking opening (25) extends on the locking profile (28) in a substantially radial direction with reference to the longitudinal axis of the rotor.

3. The locking device according to claim 2, **characterized in that** the locking bolt (12) in its longitudinal direction can be moved in a direction substantially parallel to the rotor.

4. The locking device according to claim 1, **characterized in that** the flat second contact surface (19) of the locking opening (25) extends on the locking profile (28) in a substantially axial direction with reference to the longitudinal axis of the rotor.

5. The locking device according to claim 4, **characterized in that** the locking bolt (12) can be moved in its longitudinal direction in a direction substantially radial to the rotor.

6. The locking device according to one of claims 1 to 5, **characterized in that** guide element (26) is non-rotatably arranged on the main frame (27), wherein the locking bolt (12) is movably arranged within the guide element (26).

7. The locking device according to claim 1, **characterized in that** the at least one coupling element (32) has at least one spring element.

8. The locking device according to one of claims 1 or 7, **characterized in that** a rotation lock (20) is provided that secures the catch (15) against rotating in the guide element (26).

9. The locking device according to claim 8, **characterized in that** the rotation lock (20) is designed as a cylindrical pin, the first end of which is immovably connected to the main frame (27), and the second end of which can be inserted into a recess (16) in the catch (15).

10. The locking device according to one of claims 1 to 9, **characterized in that** a drive (24) is provided by means of which the catch (15) can be moved.

11. The locking device according to claim 10, **characterized in that** the drive (24) has a fastening element (22) that is connectable to the mainframe (27) and on which an elongated adjusting element (30) is arranged.

12. The locking device according to claim 11, **characterized in that** the elongated adjusting element (30) is a drive spindle.

13. A method for locking a wind turbine drive train that is mounted on a mainframe and has a locking device according to one of claims 1-12, wherein the drive train has a rotor with a locking profile that has at least one locking opening with a flat contact surface into which a locking pin with a tapering end section can be inserted, wherein the end section of the locking bolt has at least one flat first contact surface, **characterized by** the following steps:
• aligning the locking profile with one of its locking openings in a position in which the locking bolt can be inserted into the locking opening,
• advancing the locking bolt in its longitudinal direction,
• rotating the locking bolt about its longitudinal axis such that when the locking bolt is in its advanced state, the flat first contact surface of the locking bolt lies flat against the flat second contact surface of the locking opening.

14. The method according to the preceding claim, **characterized in that** the locking bolt independently aligns in the locking opening while advancing.

## Revendications

1. Dispositif de verrouillage pour une transmission, montée sur un support de machine (27), d'une éolienne dotée d'un rotor, comportant un axe de verrouillage (12) ainsi qu'un profil de verrouillage (28) qui peut être disposé sur le rotor de manière solidaire en rotation et qui comprend au moins une ouverture de verrouillage (25), l'axe de verrouillage (12) étant mobile par rapport au profil de verrouillage (28) et pouvant être inséré dans l'ouverture de verrouillage (25) du disque de verrouillage (28) avec une partie d'extrémité (14) s'amincissant, dans lequel
• l'axe de verrouillage (12) est rotatif sur son axe longitudinal,
• l'axe de verrouillage (12) comporte au moins une première surface d'appui aplatie (18) sur sa partie d'extrémité (14),
• l'ouverture de verrouillage (25) dans le profil de verrouillage (28) comporte au moins une deuxième surface d'appui aplatie (19) et
• l'axe de verrouillage (12) s'aligne de telle manière lors de l'insertion dans l'ouverture de verrouillage (25) que sa au moins une surface d'appui aplatie (18) repose à plat contre l'au moins une surface d'appui aplatie (19) de l'ouverture de verrouillage (25), **caractérisé en ce que**
l'axe de verrouillage (12) coopère en rotation avec un élément d'entraînement (15) par le biais d'au moins un élément de couplage (32) et est monté rotatif dans une plage de rotation réglable à partir d'une position initiale en rotation vers la gauche et/ou vers la droite.

2. Dispositif de verrouillage selon la revendication 1, **caractérisé en ce que** la deuxième surface d'appui aplatie (19) de l'ouverture de verrouillage (25) s'étend sur l'élément de verrouillage (28) dans une direction sensiblement radiale par rapport à l'axe longitudinal du rotor.

3. Dispositif de verrouillage selon la revendication 2, **caractérisé en ce que** l'axe de verrouillage (12) est mobile dans sa direction longitudinale sensiblement dans une direction parallèle au rotor.

4. Dispositif de verrouillage selon la revendication 1, **caractérisé en ce que** la deuxième surface d'appui aplatie (19) de l'ouverture de verrouillage (25) s'étend sur le profil de verrouillage (28) dans une direction sensiblement axiale par rapport à l'axe longitudinal du rotor.

5. Dispositif de verrouillage selon la revendication 4, **caractérisé en ce que** l'axe de verrouillage (12) est mobile dans sa direction longitudinale sensiblement dans une direction radiale par rapport au rotor.

6. Dispositif de verrouillage selon l'une des revendications 1 à 5, **caractérisé en ce qu'**un élément de guidage (26) est disposé de manière solidaire en rotation sur le support de machine (27), l'axe de verrouillage (12) étant disposé de manière mobile dans l'élément de guidage (26).

7. Dispositif de verrouillage selon la revendication 1, **caractérisé en ce que** l'au moins un élément de couplage (32) comporte au moins un élément de ressort.

8. Dispositif de verrouillage selon l'une des revendications 1 ou 7, **caractérisé en ce qu'**une sûreté contre la torsion (20), qui bloque l'élément d'entrainement (15) afin d'empêcher une torsion dans l'élément de guidage (26), est prévue.

9. Dispositif de verrouillage selon la revendication 8, **caractérisé en ce que** la sûreté contre la torsion (20) est réalisée sous la forme d'une tige cylindrique, qui est reliée par sa première extrémité au support de machine (27) sans déplacement possible par rapport à celui-ci et qui peut être insérée dans un évidement (16) de l'élément d'entraînement (15) avec sa seconde extrémité.

10. Dispositif de verrouillage selon l'une des revendications 1 à 9, **caractérisé en ce qu'**un entraînement (24), permettant de déplacer l'élément d'entraînement (15), est prévu.

11. Dispositif de verrouillage selon la revendication 10, **caractérisé en ce que** l'entraînement (24) comporte un élément de fixation (22) qui peut être relié au support de machine (27) et sur lequel un élément de réglage (30) oblong est disposé.

12. Dispositif de verrouillage selon la revendication 11, **caractérisée en ce que** l'élément de réglage (30) oblong est une broche d'entraînement.

13. Procédé de verrouillage d'une transmission, montée sur un support de machine, d'une éolienne, comprenant un dispositif de verrouillage selon l'une des revendications 1 à 12, la transmission comportant un rotor doté d'un profil de verrouillage, qui possède au moins une ouverture de verrouillage avec une surface d'appui aplatie, dans laquelle un axe de verrouillage doté d'une partie d'extrémité s'amincissant peut être inséré, la partie d'extrémité de l'axe de verrouillage comportant au moins une première surface d'appui aplatie, **caractérisé par** les étapes suivantes :
• alignement du profil de verrouillage avec une de ses ouvertures de verrouillage dans une position dans laquelle l'axe de verrouillage peut être introduit dans l'ouverture de verrouillage,
• avance de l'axe de verrouillage dans sa direction longitudinale et
• rotation de l'axe de verrouillage sur son axe longitudinal de telle manière que dans l'état avancé de l'axe de verrouillage, la première surface d'appui aplatie de l'axe de verrouillage repose à plat contre la deuxième surface d'appui aplatie de l'ouverture de verrouillage.

14. Procédé selon la revendication précédente, **caractérisé en ce que** l'axe de verrouillage s'aligne de manière autonome dans l'ouverture de verrouillage pendant l'avance.
